(19) Europäisches Patentamt

European Patent Office

Office européen des brevets

(11) **EP 3 111 188 B1**

(12) **FASCICULE DE BREVET EUROPEEN**

(45) Date de publication et mention de la délivrance du brevet:
**29.11.2017 Bulletin 2017/48**

(21) Numéro de dépôt: **15713203.6**

(22) Date de dépôt: **26.02.2015**

(51) Int Cl.:
***G01M 11/02*** *(2006.01)*

(86) Numéro de dépôt international:
**PCT/FR2015/050465**

(87) Numéro de publication internationale:
**WO 2015/128589 (03.09.2015 Gazette 2015/35)**

(54) **INSTRUMENT OPTIQUE POUR IDENTIFIER ET LOCALISER DES MICROGRAVURES PRÉSENTES SUR UNE LENTILLE OPHTALMIQUE**

OPTISCHES INSTRUMENT ZUR IDENTIFIZIERUNG UND LOKALISIERUNG VON MIKROÄTZUNG AUF EINER OPHTHALMISCHEN LINSE

OPTICAL INSTRUMENT FOR IDENTIFYING AND LOCATING MICRO-ETCHING ON AN OPHTHALMIC LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2014 FR 1451614**

(43) Date de publication de la demande:
**04.01.2017 Bulletin 2017/01**

(73) Titulaire: **Essilor International (Compagnie Générale d'Optique) 94220 Charenton-le-Pont (FR)**

(72) Inventeur: **ESCALIER, Guilhem 94227 Charenton-le-Pont Cedex (FR)**

(74) Mandataire: **Santarelli 49, avenue des Champs-Elysées 75008 Paris (FR)**

(56) Documents cités:
**EP-A1- 2 239 552    EP-A2- 1 061 329
FR-A1- 2 825 466    US-B2- 8 593 623**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

L'invention a trait aux instruments optiques pour identifier et localiser des microgravures présentes sur une lentille ophtalmique.

ARRIERE-PLAN TECHNOLOGIQUE

On sait que les microgravures sont de faibles variations locales d'épaisseur de la lentille ou de faibles variations locales de l'indice optique, qui servent à repérer des points caractéristiques d'une lentille ophtalmique, par exemple son Point de Référence Prisme (PRP).

Lorsqu'un faisceau lumineux rencontre une microgravure, sa phase est modifiée localement par la microgravure.

L'une des techniques permettant de visualiser les microgravures est la technique du contraste de phase qui est basée sur la diffraction du faisceau lumineux provoquée par la variation locale de la phase lors de la rencontre d'un faisceau lumineux cohérent avec une microgravure. Plus précisément, le faisceau lumineux employé est cohérent spatialement. La diffraction est rendue visible par une modification locale de l'intensité (diffraction de Fresnel).

On connaît déjà, notamment par les demandes de brevet européen EP 2 239 552, EP 1 613 450 et EP 1 739 472, un instrument optique comportant, pour visualiser des microgravures présentes sur une face d'une lentille ophtalmique :

- une source lumineuse ponctuelle ;
- un organe de collimation, avec ladite source lumineuse ponctuelle qui est disposée à un premier foyer de cet organe de collimation pour que de la lumière issue de cette source lumineuse ponctuelle devienne, après avoir traversé l'organe de collimation, un faisceau de lumière collimatée ;
- un rétroréflecteur de lumière ;
- un support configuré pour recevoir la lentille ophtalmique entre l'organe de collimation et le rétroréflecteur de lumière dans une position où la face de la lentille ophtalmique sur laquelle sont présentes des microgravures est en regard de l'organe de collimation ; avec l'organe de collimation, le support et le rétroréflecteur qui sont disposés pour que le faisceau de lumière collimatée issu de l'organe de collimation rencontre la face de la lentille ophtalmique sur laquelle sont présentes des microgravures, traverse la lentille ophtalmique, rencontre le rétroréflecteur, revienne vers la lentille ophtalmique et traverse à nouveau la lentille ophtalmique puis l'organe de collimation ;
- un organe d'affichage ; et
- un organe de capture d'images relié à l'organe d'affichage, lequel organe de capture d'images comporte un objectif disposé à un deuxième foyer de l'organe de collimation, lequel objectif est mis au point sur la face de la lentille ophtalmique sur laquelle sont présentes des microgravures pour que les images affichées par l'organe d'affichage relié à l'organe de capture d'images contiennent une représentation des microgravures permettant d'identifier et de localiser les microgravures.

OBJET DE L'INVENTION

L'invention vise à fournir un instrument du même genre mais plus performant.

Elle propose à cette fin un instrument optique pour identifier et localiser des microgravures présentes sur une lentille ophtalmique, comportant :

- une source lumineuse ponctuelle ;
- un organe de collimation, avec ladite source lumineuse ponctuelle qui est disposée à un premier foyer dudit organe de collimation pour que de la lumière issue de ladite source lumineuse ponctuelle devienne, après avoir traversé ledit organe de collimation, un faisceau de lumière collimatée ;
- un organe de retour de lumière ;
- un support configuré pour recevoir ladite lentille ophtalmique entre ledit organe de collimation et ledit organe de retour de lumière ; avec ledit organe de collimation, ledit support et ledit organe de retour de lumière qui sont disposés pour que le faisceau de lumière collimatée issu dudit organe de collimation rencontre l'emplacement de la lentille ophtalmique où sont présentes des microgravures, traverse ladite lentille ophtalmique, rencontre ledit organe de retour de lumière, revienne vers ladite lentille ophtalmique et traverse à nouveau ladite lentille ophtalmique puis ledit organe de collimation ;
- un organe d'exploitation d'images ; et
- un organe de capture d'images relié audit organe d'exploitation d'images, lequel organe de capture d'images comporte un objectif disposé à un deuxième foyer dudit organe de collimation, lequel objectif est mis au point pour que les images fournies à l'organe d'exploitation d'images relié audit organe de capture d'images contiennent une représentation desdites microgravures permettant d'identifier et de localiser lesdites microgravures ;

caractérisé en ce que :

- ledit organe de retour de lumière est un rétrodiffuseur ;
- ledit objectif dudit organe de capture d'images est mis au point pour fournir à l'organe d'exploitation d'images des images du rétrodiffuseur ;
- ladite source lumineuse ponctuelle présente une longueur d'ondes À comprise entre 700 et 1000 nm ; et

- ledit organe de collimation présente une distance focale F et ladite source lumineuse ponctuelle présente un diamètre D inférieur ou égal à un cinquantième de la distance focale F.

Ainsi, dans l'instrument optique selon l'invention, l'organe de retour de lumière n'est pas un rétroréflecteur mais un rétrodiffuseur, de sorte que la lumière retournant vers la lentille ophtalmique n'est plus cohérente spatialement.

En conséquence, le faisceau retournant vers la lentille ophtalmique, lorsqu'il traverse la lentille ophtalmique, n'est pas affecté par les microgravures.

Du fait que dans l'instrument optique selon l'invention, la source lumineuse ponctuelle présente une longueur d'ondes comprise entre 700 nm et 1000 nm, c'est-à-dire dans l'infrarouge proche de la lumière visible, l'atténuation de la lumière dans son trajet entre la source lumineuse ponctuelle et l'organe de capture d'images est modérée, y compris lorsque la lentille ophtalmique est teintée.

Bien entendu, l'organe de capture d'images est choisi pour être sensible à cette plage de longueurs d'ondes.

En outre de mettre en oeuvre une longueur d'ondes comprise dans cette plage, la source lumineuse ponctuelle de l'instrument optique selon l'invention présente un diamètre D inférieur ou égal à un cinquantième de la distance focale F de l'organe de collimation.

Il a en effet été observé qu'avec cette plage de longueur d'ondes et avec un tel diamètre D de la source lumineuse ponctuelle, on peut obtenir que l'image des microgravures projetée sur le rétrodiffuseur soit contrastée.

On pense que ce caractère contrasté de l'image provient de ce que la largeur de cohérence spatiale du faisceau de lumière collimatée est en bonne adéquation avec la largeur des microgravures.

Grâce à ce caractère contrasté de l'image, l'ouverture de l'objectif de l'organe de capture d'images peut être relativement importante.

Une telle ouverture limite les pertes de flux lumineux dans l'organe de capture d'images.

Grâce à cela, l'instrument selon l'invention peut permettre une exploitation fluide des microgravures. Si par exemple l'organe d'exploitation d'images est un organe d'affichage, les microgravures peuvent être observées sur l'organe d'affichage lorsque l'utilisateur fait bouger la lentille ophtalmique sur le support.

On notera qu'au contraire, dans les instruments optiques antérieurs tels que décrits par les demandes de brevet européen susmentionnées EP 1 613 450 et EP 1 739 472, où l'objectif est mis au point sur la face de la lentille ophtalmique sur laquelle sont présentes des microgravures, l'organe de capture d'images regarde sur cette face l'effet de la lumière revenant du rétroréflecteur, ce qui fait que les images capturées ont tendance à être floues et qu'en conséquence l'ouverture de l'objectif de l'organe de capture d'images doit être relativement petite, ce qui génère des pertes importantes de flux lumineux dans l'organe de capture d'images.

On notera par ailleurs que l'on connaissait déjà, par la demande de brevet européen EP 0 856 728, un procédé et un dispositif optique de détection de défauts sur des objets tels que des feuilles de matériau transparent, dans lesquelles de la lumière est renvoyée vers l'objet par un rétrodiffuseur.

Le procédé et le dispositif optique décrits par ce document permettent simplement l'identification de défauts grossiers, ce qui n'a rien à voir avec l'identification et la localisation de microgravures présentes sur une lentille ophtalmique.

On notera encore que la demande de brevet européen EP 1 093 907 propose d'utiliser le dispositif optique du document EP 0 856 728 pour la détection de caractéristiques d'une lentille ophtalmique sous la forme de marquages imprimés ou de marquages cachés. Pour les raisons déjà indiquées, ces marquages cachés ne peuvent pas être des microgravures.

Selon des caractéristiques avantageuses, notamment en raison de la précision d'identification et de localisation des microgravures qu'elles procurent, l'instrument optique selon l'invention est configuré pour des microgravures ayant une largeur a comprise entre 10 $\mu$m et 80 $\mu$m tandis que le diamètre D de ladite source lumineuse ponctuelle et ladite distance focale F dudit organe de collimation satisfont à la relation :

$$D \leq F\lambda/5a$$

avec $\lambda$ qui est la longueur d'ondes de ladite source lumineuse ponctuelle.

Selon des caractéristiques avantageuses plus particulières, procurant une excellente précision d'identification et de localisation des microgravures, l'instrument optique selon l'invention est configuré pour des microgravures ayant une largeur a comprise entre 30 $\mu$m et 60 $\mu$m avec $\lambda$ qui est comprise entre 800 et 900 nm tandis que F est comprise entre 150 et 300 mm.

Selon d'autres caractéristiques avantageuses :

- ladite source lumineuse ponctuelle est formée par une source lumineuse étendue et par un diaphragme présentant un sténopé placé en regard de ladite source lumineuse étendue, le diamètre dudit sténopé formant ainsi le diamètre D de ladite source lumineuse ponctuelle ;
- ledit instrument optique comporte une lame semi-réfléchissante de part et d'autre de laquelle sont disposés ladite source lumineuse ponctuelle et ledit objectif dudit organe de capture d'images ;
- ledit rétrodiffuseur est rotatif ; et/ou
- ledit instrument optique comporte un dispositif d'analyse d'images configuré pour identifier et localiser lesdites microgravures, et un dispositif de positionnement automatique d'un pion de centrage sur une face de ladite lentille ophtalmique, relié audit dispositif d'analyse d'images.

Selon des caractéristiques avantageuses, l'instrument optique comporte en outre :

- un dispositif d'entraînement en rotation du rétrodiffuseur, configuré pour faire tourner le rétrodiffuseur autour d'un centre de rotation prédéterminé ;
- une ouverture ménagée dans ledit rétrodiffuseur, ladite ouverture étant configurée pour que le centre de rotation du rétrodiffuseur soit ailleurs que dans l'ouverture ; et

un ensemble de réception et d'analyse de lumière, situé du côté du rétrodiffuseur opposé audit support, avec ledit support, ledit rétrodiffuseur et ladite ouverture qui sont configurés pour que ledit ensemble de réception et d'analyse de lumière reçoive de la lumière dudit faisceau de lumière collimatée passée au travers de ladite lentille ophtalmique et au travers de ladite ouverture, ledit ensemble de réception et d'analyse de lumière étant configuré pour déterminer au moins une caractéristique optique de ladite lentille ophtalmique.

Du fait que le centre de rotation du rétrodiffuseur ne se trouve pas dans l'ouverture, il n'existe aucune partie de l'ouverture centrée sur le centre de rotation.

Par conséquent, n'importe quel lieu fixe en regard du rétrodiffuseur entre son centre de rotation et sa périphérie est au droit, pendant au moins une partie de chaque tour, d'une portion pleine du rétrodiffuseur.

Les images du rétrodiffuseur fournies à l'organe d'exploitation d'images ne présentent donc pas de lacune correspondant à l'ouverture et permettent donc de voir la totalité des microgravures.

On notera que le document EP 1 997 585 décrit un instrument optique où le rétroréflecteur de lumière est en deux parties dont l'une, au centre, est fixe, et l'autre, annulaire de même centre, est rotative, avec la partie du rétroréflecteur fixe au centre qui est le sommet d'un ensemble de réception et d'analyse de lumière.

Dans cet instrument optique, les images affichées par l'organe d'affichage présentent une lacune centrale correspondant à la partie du rétroréflecteur fixe au centre. Cette lacune gêne la visibilité des marquages situés au centre de la lentille ophtalmique.

Selon des caractéristiques avantageuses, le dispositif d'entrainement en rotation du rétrodiffuseur et l'organe de capture d'images sont reliés à un dispositif de commande configuré pour que chaque intervalle de temps pendant lequel l'organe de capture d'images prend une image ait une durée pendant laquelle le rétrodiffuseur fait un nombre entier de tour(s).

Selon des caractéristiques avantageuses alternatives, le dispositif d'entrainement en rotation du rétrodiffuseur et la source lumineuse ponctuelle sont reliés à un dispositif de commande configuré pour faire émettre à ladite source lumineuse ponctuelle des flashs ayant chacun une durée pendant laquelle le rétrodiffuseur fait un nombre entier de tour(s).

Selon d'autres caractéristiques avantageuses :

- ledit ensemble de réception et d'analyse de lumière comporte une matrice de Hartmann éclairée par ladite lumière dudit faisceau de lumière collimatée passée au travers de ladite lentille ophtalmique et au travers de ladite ouverture ; un organe additionnel de capture d'images éclairé par la lumière passée au travers de la matrice de Hartmann ; et un dispositif d'analyse pour analyser les images capturées par l'organe additionnel de capture d'images afin de déterminer ladite au moins une caractéristique optique de la lentille ophtalmique ;
- ledit dispositif d'analyse pour analyser les images capturées par l'organe additionnel de capture d'images est relié à un organe d'affichage pour lui permettre d'afficher ladite au moins une caractéristique optique de la lentille ophtalmique ;
- ledit dispositif d'analyse pour analyser les images capturées par l'organe additionnel de capture d'images est relié à un dispositif de positionnement automatique d'un pion de centrage sur une face de ladite lentille ophtalmique ;

- ledit rétrodiffuseur est à contour circulaire et ladite ouverture est en forme de secteur angulaire ; et/ou
- ledit rétrodiffuseur est à contour circulaire et ladite ouverture en forme de spirale.

BREVE DESCRIPTION DES DESSINS

L'exposé de l'invention sera maintenant poursuivi par la description détaillée d'exemples de réalisation, donnée ci-après, à titre illustratif et non limitatif, en référence aux dessins annexés. Sur ceux-ci :

- la figure 1 est une vue très schématique montrant un ensemble d'émission et de réception de lumière ainsi qu'un support que comporte un premier mode de réalisation d'un instrument optique selon l'invention, avec une lentille ophtalmique présentant des microgravures sur l'une de ses faces, cette lentille ophtalmique étant reçue sur le support dans une position où la face sur laquelle sont présentes les microgravures est en regard de l'ensemble d'émission et de réception de lumière ;
- la figure 2 est une vue très schématique montrant un rétrodiffuseur que comporte cet instrument optique et la lentille ophtalmique reçue sur le support ;
- la figure 3 est une vue très schématique montrant l'ensemble d'émission et de réception de lumière, la lentille ophtalmique et le rétrodiffuseur ainsi que le trajet de la lumière depuis le rétrodiffuseur jusqu'à l'ensemble d'émission et de réception de lumière ;

- la figure 4 est une vue schématique du premier mode de réalisation de l'instrument selon l'invention, montrant de façon détaillée l'ensemble d'émission et de réception de lumière ;
- la figure 5 est une vue schématique illustrant certaines caractéristiques géométriques de la source lumineuse ponctuelle et de l'organe de collimation ;
- la figure 6 est un schéma-bloc montrant des éléments connectés à l'organe de capture d'images pour permettre le positionnement automatique d'un pion de centrage sur la lentille ophtalmique ;
- la figure 7 est une vue en plan du rétrodiffuseur ;
- la figure 8 est une vue semblable à la figure 7, mais pour un deuxième mode de réalisation de l'instrument optique selon l'invention ;
- la figure 9 est une vue schématique semblable au bas de la figure 4 mais pour le deuxième mode de réalisation de l'instrument optique selon l'invention ;
- la figure 10 est une vue semblable à la figure 8 mais pour une première variante du deuxième mode de réalisation de l'instrument optique selon l'invention ;
- la figure 11 est une vue semblable à la figure 9 mais plus détaillée et correspondant à la première variante illustrée sur la figure 10 ;
- la figure 12 est une vue semblable aux figures 8 et 10 mais pour une deuxième variante du deuxième mode de réalisation de l'instrument optique selon l'invention ;
- la figure 13 est un schéma-bloc montrant des éléments connectés aux organes de capture d'images du deuxième mode de réalisation de l'instrument optique selon l'invention ; et
- la figure 14 est un schéma-bloc montrant des éléments connectés à la source lumineuse dans une version où elle émet des flashs.

## DESCRIPTION DETAILLEE D'EXEMPLES DE REALISATION

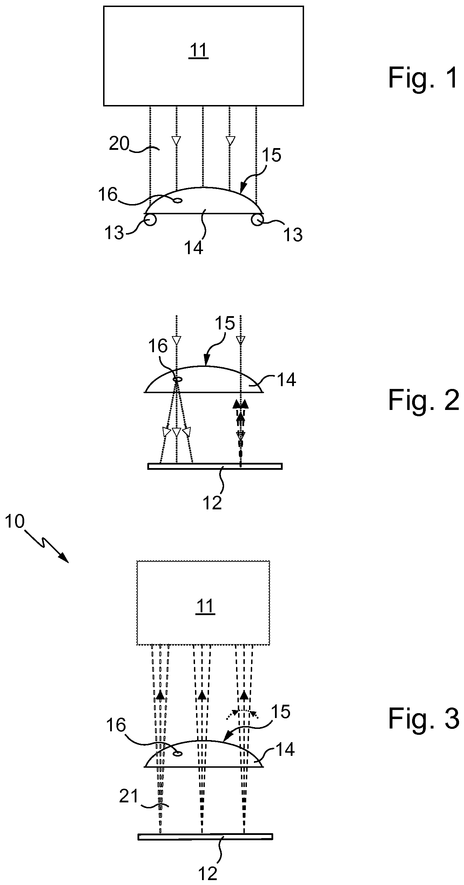

L'instrument optique 10 illustré sur les figures 1 à 4 comporte un ensemble 11 d'émission et de réception de lumière, un rétrodiffuseur 12 et un support 13 (figure 1) configuré pour recevoir une lentille ophtalmique 14 entre l'ensemble 11 et le rétrodiffuseur 12 dans une position où sa face 15 sur laquelle sont présentes des microgravures 16 est en regard de l'ensemble 11 d'émission et de réception de lumière.

Les microgravures 16 sont de faibles variations locales d'épaisseur de la lentille ou de faibles variations locales de l'indice optique.

Diverses techniques permettent de rendre présentes sur une face d'une lentille ophtalmique des microgravures 16 : légères surépaisseurs lorsque les microgravures sont moulées avec la lentille ophtalmique, légers creux générés par laser ou altérations du matériau modifiant localement son indice optique.

Lorsqu'un faisceau lumineux cohérent rencontre une microgravure 16, sa phase est modifiée localement par la microgravure.

Cette variation locale de la phase fait diffracter le faisceau lumineux.

Dans le cas d'un faisceau lumineux cohérent spatialement, la diffraction est rendue visible par une modification locale de l'intensité (diffraction de Fresnel).

Les microgravures 16 servent à repérer des points caractéristiques de la lentille ophtalmique 14, par exemple son Point de Référence Prisme (PRP).

L'ensemble 11 d'émission et de réception de lumière émet un faisceau 20 (figure 1) de lumière collimatée cohérente spatialement.

Ainsi que montré sur la gauche de la figure 2, lorsque le faisceau 20 rencontre une microgravure 16, la lumière est diffractée localement.

La projection de la lumière ayant traversé la lentille 14 sur le rétrodiffuseur 12 présente des variations d'intensité dues à la diffraction de la lumière provoquée par les microgravures 16.

L'image du faisceau 20 projetée sur le rétrodiffuseur 12 présente donc des variations d'intensité de formes semblables à celles des microgravures 16.

Ainsi que montré sur la droite de la figure 2, le rétrodiffuseur 12 renvoie la lumière qui lui est parvenue dans la même direction avec une légère diffusion.

Le faisceau lumineux 21 renvoyé par le rétrodiffuseur, du fait de cette légère diffusion, est spatialement incohérent.

Ainsi qu'on le voit sur la figure 3, le faisceau lumineux 21 ainsi émis par le rétrodiffuseur 12 traverse la lentille ophtalmique 14 sans ou quasiment sans modifications dues aux microgravures 16 et parvient à l'ensemble 11 d'émission et de réception de lumière.

Dans la description qui précède, on a omis de mentionner la déviation prismatique que subit le faisceau incident 20 lorsqu'il traverse la lentille et que subit le faisceau 21 émis par le rétrodiffuseur 12 lorsqu'il traverse à nouveau la lentille.

En effet, ces deux déviations prismatiques successives se compensent parfaitement.

Ainsi, alors que l'image des microgravures 16 se formant sur le rétrodiffuseur 12 est déformée par la déviation prismatique, l'image du rétrodiffuseur 12 vue au travers de la lentille ophtalmique 14 par l'ensemble 11 est déformée exactement de façon inverse.

Par conséquent, l'image du rétrodiffuseur 12 vue par l'ensemble 11 contient une représentation exacte des microgravures 16.

Le fait que le faisceau optique traversant la lentille ophtalmique 14 soit collimaté et cohérent spatialement permet d'avoir une projection des microgravures 16 sur le rétrodiffuseur 12 très contrastée.

Le support 13 est positionné pour que la projection des microgravures 16 sur le rétrodiffuseur 12 soit aisée à observer : la distance entre la lentille ophtalmique 14 et le rétrodiffuseur 12 est suffisamment petite pour que la projection sur le rétrodiffuseur 12 reste nette (si la distance est trop grande, du fait de la diffraction au niveau des microgravures 16, l'image serait floue) et suffisamment grande pour que la projection des microgravures 16 ait une taille suffisante pour être observée.

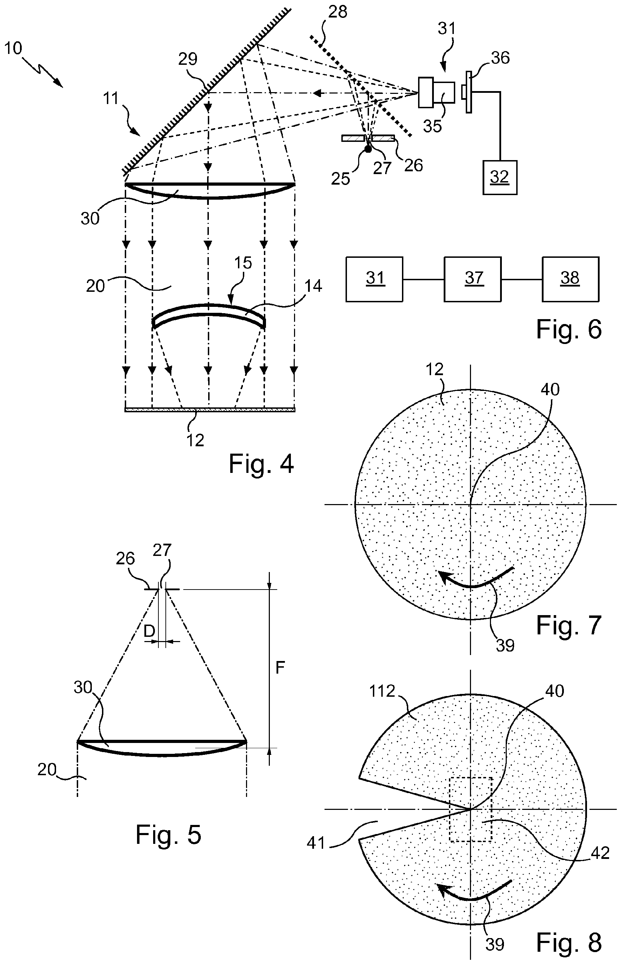

On va maintenant décrire, à l'appui de la figure 4, le détail de l'ensemble 11 d'émission et de réception de lumière.

Dans l'exemple illustré, l'ensemble 11 comporte une source lumineuse étendue 25, un diaphragme 26 à sténopé 27, une lame semi-réfléchissante 28, un miroir de renvoi 29, une lentille de collimation 30, une caméra 31 et un organe d'affichage 32 relié à la caméra 31.

Le diaphragme 26 et l'objectif 35 de la caméra 31 sont situés de part et d'autre de la lame semi-réfléchissante 28, dans des lieux conjugués, c'est-à-dire qu'ils sont vus du côté du miroir de renvoi 29 comme étant situés en un même lieu.

Ce lieu est choisi comme étant le foyer de la lentille de collimation 30. Ainsi, chacun des deux lieux conjugués correspond au foyer de la lentille de collimation 30.

Il peut donc être considéré que le sténopé 27 du diaphragme 26 est disposé à un premier foyer de la lentille de collimation 30 et que l'objectif 35 de la caméra 31 est disposé à un deuxième foyer de la lentille de collimation 30.

La source lumineuse étendue 25 est placée au plus près du diaphragme 26, par exemple à moins de 0,5 mm, de sorte que le sténopé 27 du diaphragme 26 constitue une source lumineuse ponctuelle.

La lumière émise par cette source ponctuelle se réfléchit sur la lame semi-réfléchissante 28 puis sur le miroir de renvoi 29 et traverse la lentille de collimation 30.

Du fait que le sténopé 27 est situé au foyer de la lentille de collimation 30, le faisceau 20 émergeant de la lentille 30 est collimaté, c'est-à-dire que tous ses rayons sont orientés parallèlement les uns aux autres.

Sur la figure 5, on a représenté schématiquement la distance focale F de la lentille de collimation 30 et le diamètre D du sténopé 27, c'est-à-dire le diamètre de la source lumineuse ponctuelle formée par la source lumineuse étendue 25 et par le diaphragme 26.

En pratique, la source lumineuse ponctuelle peut être formée par un composant du marché réunissant une LED formant la source lumineuse étendue 25 et un diaphragme 26.

Pour que le flux lumineux soit suffisant, le diamètre D est d'au moins 10 $\mu$m , voire au moins 20 $\mu$m. Les valeurs maximales prévues pour le diamètre D sont décrites plus loin.

La lumière du faisceau 21 issu du rétrodiffuseur 12 ayant traversé la lentille ophtalmique 14 traverse ensuite la lentille de collimation 30, est réfléchie par le miroir de renvoi 29, traverse la lame semi-réfléchissante 28 et parvient à l'objectif 35 de la caméra 31.

Cet objectif est mis au point pour que le capteur 36 de la caméra 31 prenne des images du rétrodiffuseur 12.

Ces images s'affichent sur l'organe d'affichage 32 relié à la caméra 31.

Ainsi, un observateur qui regarde l'organe d'affichage 32 voit des images permettant d'identifier et de localiser les microgravures 16 présentes sur la face 15 de la lentille ophtalmique 14.

Cela permet à un opérateur de savoir où sont les microgravures 16 sur la lentille ophtalmique 14 et donc où se trouvent le centre optique et l'axe de puissance sphérique de cette lentille ophtalmique qui lui sont utiles par exemple pour procéder au détourage de la lentille ophtalmique 14, c'est-à-dire pour tailler les bords de la lentille ophtalmique 14 à la forme de la monture dans laquelle elle doit être mise en place.

En pratique, le pion de centrage utilisé pour fixer la lentille ophtalmique 15 à la machine de détourage est posé dans l'instrument 10 grâce à la visualisation des microgravures 16. La pose du pion de centrage peut s'effectuer manuellement par l'opérateur.

La figure 6 montre des éléments permettant la mise en place automatique du pion de centrage.

La caméra 31 est reliée, en outre de l'organe d'affichage 32, à un dispositif 37 d'analyse d'images qui est capable d'identifier et de localiser les microgravures 16. Un dispositif 38 de positionnement automatique d'un pion de centrage est relié au dispositif 37, lequel fournit au dispositif 38 les coordonnées de l'emplacement de la face 15 de la lentille ophtalmique 14 sur lequel doit être posé le pion de centrage.

Le dispositif 38 de positionnement automatique d'un pion de centrage est par exemple tel que décrit dans la demande de brevet français 2 825 466, qui correspond au brevet américain US 6,888,626.

D'une façon générale, il est intéressant que la source lumineuse étendue 25 et donc la source lumineuse ponctuelle qu'elle forme avec le diaphragme 26, présente une longueur d'ondes comprise entre 700 nm et 1000 nm, c'est-à-dire dans l'infrarouge proche de la lumière visible.

Ainsi, l'atténuation de la lumière dans son trajet entre le sténopé 27 et le capteur 36 de la caméra 31 est modérée, y compris lorsque la lentille ophtalmique 14 est teintée.

Bien entendu, le capteur 36 de la caméra 31 est choisi pour être sensible à cette plage de longueurs d'ondes.

D'une façon générale, l'instrument 10 est ici configuré pour des microgravures 16 dont la largeur est comprise entre 10 et 80 $\mu$m.

Il est important que l'image des microgravures 16 projetée sur le rétrodiffuseur 12 soit contrastée. Cela permet en effet d'avoir une ouverture de l'objectif 35 de la caméra 31 relativement importante. Une telle ouverture limite les pertes de flux lumineux vers le capteur 36 de la caméra 31.

Ainsi, le flux lumineux reçu par le capteur 36 de la caméra 31 est suffisant pour permettre une observation fluide des microgravures 16, c'est-à-dire que l'utilisateur peut faire bouger la lentille ophtalmique 14 sur le support 13 avec l'organe d'affichage 32 qui se rafraîchit en temps réel (en pratique, à une fréquence au moins égale 15 Hz).

Il a été observé qu'avec la plage de longueurs d'ondes susmentionnée, un diamètre D du sténopé 27 inférieur ou égal à un cinquantième de la distance focale F de la lentille de collimation 30 (distance entre la lentille 30 et son foyer) permet d'obtenir que l'image des microgravures 16 projetée sur le rétrodiffuseur 12 soit contrastée.

On pense que cela provient d'une bonne adéquation entre la largeur de cohérence spatiale du faisceau 20 et la largeur des microgravures 16.

D'une façon générale, vu la limite inférieure de 10 μm mentionnée ci-dessus pour la largeur des microgravures, il est avantageux d'avoir une largeur de cohérence spatiale du faisceau 20 qui soit supérieure ou égale à 5 fois la largeur des microgravures 16.

Par définition, la largeur de cohérence spatiale est égale à FÀ/D, avec À qui est la longueur d'ondes du flux lumineux.

Si l'on note a la largeur des microgravures, on a la relation : $D \leq F\lambda/5a$

Par exemple, si :

- la largeur des microgravures est de 50 μm ;
- la longueur d'onde du flux lumineux est de 850 nm; et
- la distance focale de la lentille de collimation 30 est de 200 mm, alors le diamètre D du sténopé 27 est inférieur ou égal à 680 μm.

On a constaté que l'on obtient d'excellents résultats, pour des microgravures 16 ayant une largeur a comprise entre 30 μm et 60 μm, avec la longueur d'onde du flux lumineux À qui est comprise entre 800 et 900 μm tandis que la distance focale F est comprise entre 150 et 300 mm.

Comme indiqué ci-dessus, avec une longueur d'ondes de la source lumineuse 25 comprise entre 700 nm et 1000 nm, et un diamètre D de la source lumineuse inférieur ou égal à un cinquantième de la distance focale F de la lentille de collimation 30, l'image des microgravures 16 projetée sur le rétrodiffuseur 12 est bien contrastée.

Suivant les circonstances, le diamètre D est sélectionné comme étant inférieure ou égal à un centième, un cent cinquantième, un deux centième ou un deux cent cinquantième de la distance focale F.

On a également constaté que des paramètres favorables à rendre suffisant le flux lumineux reçu par le capteur 36 de la caméra 31 sont :

- une intensité élevée du flux lumineux émis au travers du sténopé 27 du diaphragme 26 ; et/ou
- une ouverture de l'objectif 35 en accord avec l'angle de diffusion de la lumière par le rétrodiffuseur 12 (voir la figure 3 et la partie droite de la figure 2).

Ainsi que montré sur la figure 7 par la flèche 39, pour moyenner la granulosité, le rétrodiffuseur 12 est mis en rotation lors de l'utilisation de l'instrument 10.

Il est également possible de disposer des motifs de calibrage sur le rétrodiffuseur 12 (on rappelle ici que l'objectif 35 de la caméra 31 est mis au point sur le rétrodiffuseur 12 et que c'est donc le rétrodiffuseur 12 que l'on voit, d'ailleurs en l'absence ou en présence d'une lentille ophtalmique 14), de tels motifs de calibrage n'étant plus perceptibles lorsque le rétrodiffuseur est mis en rotation rapide.

On observera que les microgravures telles que 16 sont plus précises que les marquages portés par les lentilles ophtalmiques en provenance de leurs fabricants ; et que l'instrument selon l'invention permet d'utiliser directement les microgravures, au bénéfice de la précision.

Une telle précision, par exemple pour le centrage, est importante puisque les verres deviennent de plus en plus personnalisés.

On observera que l'instrument 10 est facilement intégrable dans un instrument déjà existant, par exemple un lecteur-bloqueur ou une meuleuse.

On observera encore qu'une utilisation possible de l'instrument selon l'invention est de mesurer un éventuel décalage entre une référence donnée par les microgravures et d'autres repères présents sur le verre par exemple des marquages avec lesquels le verre est livré ; et/ou qu'une autre utilisation possible de l'instrument selon l'invention est de faire les marquages très précisément par rapport aux microgravures grâce à une lecture avec l'instrument 10.

Dans le mode de réalisation de l'instrument 10 qui vient d'être décrit, le rétrodiffuseur 12 est formé par un plateau rotatif plein, c'est-à-dire ne présentant aucune ouverture.

On va maintenant décrire à l'appui des figures 8 à 13 un deuxième mode de réalisation de l'instrument optique selon l'invention, dans lequel le rétrodiffuseur 12 est remplacé par un rétrodiffuseur dans lequel est ménagé une ouverture tandis qu'un ensemble de réception et d'analyse de lumière est disposé sous ce rétrodiffuseur, c'est-à-dire du côté du rétrodiffuseur qui est opposé au support 13 prévu pour recevoir la lentille ophtalmique 14.

Le support 13, l'ouverture ménagée dans le rétrodiffuseur et l'ensemble de réception et d'analyse de lumière sont configurés pour que ce dernier reçoive de la lumière du faisceau 20 de lumière collimatée passée au travers de la lentille ophtalmique 14 et au travers de l'ouverture ménagée dans le rétrodiffuseur.

La lumière reçue est analysée pour déterminer certaines données optiques de la lentille ophtalmique 14 utiles pour procéder au détourage de la lentille ophtalmique 14, en particulier le centre optique et l'axe de puissance cylindrique, voire pour déterminer d'autres données telles que la puissance sphérique et la puissance cylindrique.

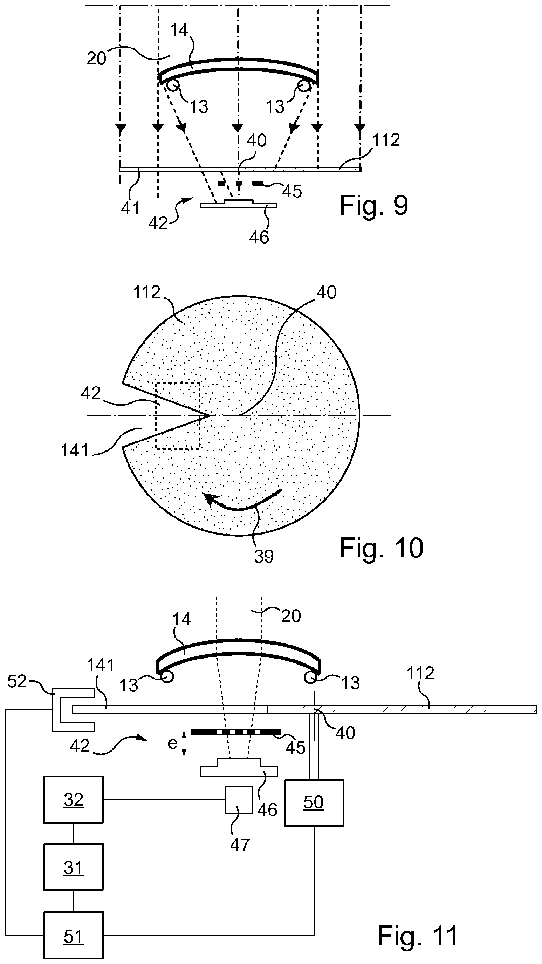

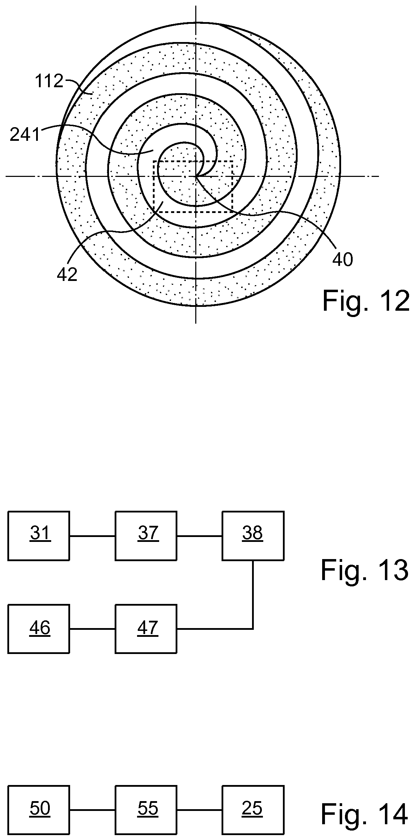

Une première version de l'instrument optique selon le deuxième mode de réalisation est illustrée sur les figures 8 et 9, une deuxième version sur les figures 10 et 11 et une troisième version sur la figure 12.

Des éléments communs aux trois versions sont illustrés sur les figures 11, 13 et 14.

Dans chacune des première, deuxième et troisième versions, le rétrodiffuseur 12 est remplacé par un rétrodiffuseur 112.

De même que le rétrodiffuseur 12, le rétrodiffuseur 112 est à contour circulaire centré sur le centre de rotation 40, mais il présente respectivement une ouverture 41, une ouverture 141 et une ouverture 241.

Dans la première version illustrée sur les figures 8 et 9, l'ouverture 41 est en forme de secteur angulaire. Elle s'étend du centre de rotation 40 jusqu'à la périphérie du rétrodiffuseur 112.

Ainsi qu'on le voit sur la figure 8, l'ensemble 42 de réception et d'analyse de lumière est disposé centré sur le centre de rotation 40.

Ainsi qu'on le voit sur la figure 9, le support 13 pour la lentille ophtalmique 14 est disposé centré vis-à-vis du centre de rotation 40.

De la lumière du faisceau 20 de lumière collimatée passée au travers de la lentille ophtalmique 14 et au travers de l'ouverture 41 parvient sur l'ensemble 42 de réception et d'analyse de lumière.

Ainsi qu'on le comprend au vu de la figure 8, à tout instant une partie de l'ensemble 42 de réception et d'analyse de lumière est au droit de l'ouverture 41.

Ainsi, à tout instant, une portion de l'ensemble 42 de réception et d'analyse de lumière reçoit de la lumière passée par l'ouverture 41.

Du fait du mouvement rotatif du rétrodiffuseur 112, chaque portion de l'ensemble 42 de réception et d'analyse de lumière se trouve à certain moment au droit de l'ouverture 41 lorsque le rétrodiffuseur 112 fait un tour.

Par conséquent, à chaque tour du rétrodiffuseur 112, la totalité de l'ensemble 42 de réception et d'analyse de lumière reçoit de la lumière passée au travers de la lentille ophtalmique 14 et au travers de l'ouverture 41.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

En analysant la lumière reçue pendant au moins un tour du rétrodiffuseur 112, l'ensemble 42 de réception et d'analyse de lumière est en mesure de déterminer des données optiques de la lentille 14, et plus précisément de la zone par laquelle la lumière est passée avant d'atteindre l'ensemble 42 de réception et d'analyse de lumière.

Du fait que le centre de rotation 40 ne se trouve pas dans l'ouverture 41 (le centre 40 est ici sur le pourtour de l'ouverture 41), il n'existe aucune partie de l'ouverture 41 centrée sur le centre de rotation 40.

Par conséquent, n'importe quel lieu fixe en regard du rétrodiffuseur 112 entre son centre de rotation 41 et sa périphérie, est au droit, pendant une partie de chaque tour, d'une portion du rétrodiffuseur 112 ne faisant pas partie de l'ouverture 41, c'est-à-dire d'une partie pleine.

Ici, où l'ouverture 41 est en forme de secteur angulaire ayant son sommet sur le centre de rotation 40 et une ouverture angulaire de 30°, chaque lieu fixe est au droit de l'ouverture 41 pendant 1/12 (30/360) de tour et par conséquent au droit d'une portion du rétrodiffuseur 112 ne faisant pas partie de l'ouverture 41 pendant 11/12 de tour.

Les images du rétrodiffuseur 112 affichées par l'organe d'affichage 32 ne présentent donc pas de lacune correspondant à l'ouverture 41 et permettent donc de voir la totalité des microgravures 16.

On va décrire ultérieurement, à l'appui de la figure 11 et à l'appui de la figure 14, des mesures qui permettent de ne pas faire apparaître du tout l'ouverture 41 sur l'organe d'affichage 32.

La deuxième version de l'instrument optique selon le deuxième mode de réalisation illustré sur les figures 9 et 10 est une variante de la première version dans laquelle l'ouverture 41 est remplacée par une ouverture 141 qui est également en forme de secteur angulaire, mais dont le sommet est à l'écart du centre de rotation 40 ; tandis que l'ensemble 42 de réception et d'analyse de lumière est excentré par rapport au centre de rotation 40, et de même pour le support 13 prévu pour recevoir la lentille ophtalmique 14; le support 13 et l'ensemble 42 de réception et d'analyse de lumière étant centrés l'un par rapport à l'autre.

De la lumière du faisceau 20 de lumière collimatée passée au travers de la lentille ophtalmique 14 et au travers de l'ouverture 141 parvient sur l'ensemble 42 de réception et d'analyse de lumière.

Ainsi qu'on le comprend au vu de la figure 10, à tout instant une partie de l'ensemble 42 de réception et d'analyse de lumière est au droit de l'ouverture 141.

Ainsi, à tout instant, une portion de l'ensemble 42 de réception et d'analyse de lumière reçoit de la lumière passée par l'ouverture 141.

Du fait du mouvement rotatif du rétrodiffuseur 112, chaque portion de l'ensemble 42 de réception et d'analyse de lumière se trouve à un certain moment au droit de l'ouverture 141 lorsque le rétrodiffuseur 112 fait un tour.

Par conséquent, à chaque tour du rétrodiffuseur 112, la totalité de l'ensemble 42 de réception et d'analyse de lumière reçoit de la lumière passée au travers de la lentille ophtalmique 14 et au travers de l'ouverture 141.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

Du fait que le centre de rotation 40 ne se trouve pas dans l'ouverture 141, il n'existe aucune partie de l'ouverture 141 centrée sur le centre de rotation 40.

Pour les mêmes raisons que celles expliquées ci-dessus pour l'ouverture 41, les images du rétrodiffuseur 112 présentant l'ouverture 141 affichées par l'organe d'affichage 32 ne présentent pas de lacune correspondant à l'ouverture 141 et permettent donc de voir la totalité des microgravures 16 de la lentille ophtalmique 14.

La troisième version de l'instrument optique selon le deuxième mode de réalisation, illustrée sur la figure 12 est une variante de la première version dans laquelle l'ouverture 41 est remplacée par une ouverture 241 qui est en forme de spirale ; tandis que l'ensemble 42 de réception et d'analyse de lumière est excentré par rapport au centre de rotation 40, et de même pour le support 13 prévu pour recevoir la lentille ophtalmique 14 ; le support 13 et l'ensemble 42 de réception et d'analyse de lumière étant centrés l'un par rapport à l'autre.

De la lumière du faisceau 20 de lumière collimatée passée au travers de la lentille ophtalmique 14 et au travers de l'ouverture 241 parvient sur l'ensemble 42 de réception et d'analyse de lumière.

Ainsi qu'on le comprend au vu de la figure 12, à tout instant une partie de l'ensemble 42 de réception et d'analyse de lumière est au droit de l'ouverture 241.

Ainsi, à tout instant, une portion de l'ensemble 42 de réception et d'analyse de lumière reçoit de la lumière passée par l'ouverture 241.

Du fait du mouvement rotatif du rétrodiffuseur 112, chaque portion de l'ensemble 42 de réception et d'analyse de lumière se trouve à un certain moment au droit de l'ouverture 241 lorsque le rétrodiffuseur 112 fait un tour.

Par conséquent, à chaque tour du rétrodiffuseur 112, la totalité de l'ensemble 42 de réception et d'analyse de lumière reçoit de la lumière passée au travers de la lentille ophtalmique 14 et au travers de l'ouverture 241.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

Du fait que le centre de rotation 40 ne se trouve pas dans l'ouverture 241, il n'existe aucune partie de l'ouverture 141 centrée sur le centre de rotation 40.

Pour les mêmes raisons que celles expliquées ci-dessus pour l'ouverture 41, les images du rétrodiffuseur 112 présentant l'ouverture 241 affichées par l'organe d'affichage 32 ne présentent pas de lacune correspondant à l'ouverture 241 et permettent donc de voir la totalité des microgravures 16 de la lentille ophtalmique 14.

Comme on le voit sur les figures 9 et 11, l'ensemble 42 de réception et d'analyse de lumière comporte une matrice de Hartmann 45 et un capteur d'images 46 disposé à une distance prédéterminée e (figure 11) de la matrice de Hartmann 45.

La matrice de Hartmann 45 est une plaque opaque transpercée de trous à intervalles réguliers, de sorte que l'image capturée par le capteur 46 est une matrice de points lumineux correspondant chacun à un trou de la matrice 45, les emplacements de ces points lumineux dépendant des caractéristiques optiques de la lentille ophtalmique 14.

L'analyse de l'image capturée par le capteur d'images 46 permet donc, par exemple par la méthode de déflectométrie de Hartmann ou de Shack-Hartmann, de connaitre les caractéristiques optiques de la lentille ophtalmique 14, notamment son centre optique, l'axe de sa puissance cylindrique, sa puissance sphérique, sa puissance cylindrique et d'autres caractéristiques. Pour plus détails, on pourra se reporter par exemple à la demande de brevet français 2 825 466 qui correspond au brevet américain US 6,888,626 ; ou à la demande internationale WO 95/34800.

Comme on le voit sur la figure 11, le capteur d'images 46 est relié à un dispositif 47 d'analyse d'images qui est capable de déterminer les caractéristiques optiques de la lentille ophtalmique 14.

Le dispositif 47 d'analyse d'images est relié à l'organe d'affichage 32, lequel peut ainsi afficher les caractéristiques optiques de la lentille ophtalmique 14 déterminées par le dispositif d'analyse d'images 47.

Ainsi que montré sur la figure 13, dans le deuxième mode de réalisation de l'instrument optique selon l'invention, le dispositif 38 de positionnement d'un pion de centrage est relié non seulement au dispositif d'analyse d'images 37, mais aussi au dispositif d'analyse d'images 47, ce qui fait que le dispositif 38 de positionnement automatique d'un pion de centrage peut connaître les coordonnées de l'emplacement de la face 15 de la lentille ophtalmique 14 sur lequel doit être posé le pion de centrage non seulement par les microgravures 16 mais aussi par les caractéristiques optiques de la lentille 14.

Sur la figure 11, on a représenté schématiquement le dispositif 50 d'entraînement en rotation du rétrodiffuseur 122 qui est configuré pour faire tourner le rétrodiffuseur 122 autour du centre de rotation 40.

On va maintenant expliquer, à l'appui de la figure 11, comment l'on peut éviter de faire apparaître sur l'organe d'affichage 32 une lacune correspondant à l'ouverture telle que 41, 141 ou 241.

La caméra 31 et le dispositif 50 d'entraînement en rotation du rétrodiffuseur 112 sont reliés à un dispositif de commande 51 configuré pour que chaque intervalle de temps pendant lequel la caméra 31 prend une image corresponde à un nombre entier de tour(s) du rétrodiffuseur 112.

Dans l'exemple illustré, chaque image est prise pendant 1/20 s et le rétrodiffuseur 112 fait un tour en 1/20 s soit une vitesse de 1200 tours/mn.

Comme expliqué ci-dessus, du fait que le centre de rotation 40 ne se trouve pas dans l'ouverture telle que 41, 141 ou 241, il n'existe aucune partie de ces ouvertures centrée sur le centre de rotation 40.

Par conséquent, n'importe quel lieu fixe en regard du rétrodiffuseur 112 entre son centre de rotation 40 et sa périphérie est au droit, pendant une partie de chaque tour, d'une portion du rétrodiffuseur 112 ne faisant pas partie de l'ouverture (portion pleine).

De même, chaque pixel du capteur 36 de la caméra 31 reçoit, pendant une partie de chaque tour, de la lumière d'une portion du rétrodiffuseur 112 ne faisant pas partie de l'ouverture.

Comme chaque image est prise pendant un ou plusieurs tours entiers du rétrodiffuseur 112, chaque pixel reçoit la même proportion de la lumière venant de la portion du rétrodiffuseur 112 ne faisant pas partie de l'ouverture telle que 41, 141 ou 241.

Chaque image prise par la caméra 31 ne comporte donc aucune lacune correspondant à l'ouverture telle que 41, 141 ou 241.

L'opérateur qui regarde l'organe d'affichage 32 perçoit les mêmes images qu'avec le rétrodiffuseur plein 12, si ce n'est que le rétrodiffuseur 112 apparaît moins lumineux, en totalité ou en partie.

Par exemple, pour le rétrodiffuseur 112 ayant l'ouverture 41 montrée sur les figures 8 et 9, la luminosité perçue pour la totalité du rétrodiffuseur 112 est de 11/12 de la luminosité perçue pour le rétrodiffuseur 12, toutes choses égales par ailleurs.

Le rétrodiffuseur 112 ayant l'ouverture 41 montrée sur les figures 8 et 9 est ainsi perçu comme un rétrodiffuseur entièrement plein (de même que le rétrodiffuseur 12) tout en laissant passer de la lumière vers l'organe 42 de réception et d'analyse de lumière.

Pour le rétrodiffuseur 112 ayant l'ouverture 141 montrée sur les figures 10 et 11, une portion centrale, dont le rayon correspond à la distance entre le centre de rotation 40 et le sommet de l'ouverture 141, est perçue avec la même luminosité que le rétrodiffuseur 12 tandis que le reste du rétrodiffuseur 112 et perçu avec une luminosité moindre.

Dans tous les cas, l'image du rétrodiffuseur 112 permet de voir la totalité des microgravures 16.

La mise en oeuvre du dispositif de commande 51 fait par exemple intervenir une base de temps commune pour commander la caméra 31 et le dispositif d'entraînement en rotation 50.

Dans l'exemple illustré sur la figure 11, il est également prévu un détecteur 52 pour connaître la position du rétrodiffuseur 112 et effectuer un asservissement de sa vitesse de rotation.

En variante, ainsi qu'illustré sur la figure 14, plutôt que de prévoir un dispositif de commande tel que 51 pour commander la caméra 31 et le dispositif 50 d'entraînement en rotation du rétrodiffuseur 12, on prévoit un dispositif 55 relié au dispositif 50 d'entraînement en rotation du rétrodiffuseur 112 et à la source lumineuse étendue 25 de la source lumineuse ponctuelle formée par la source lumineuse étendue 25 et par le diaphragme 26.

Le dispositif de commande 55 est configuré pour faire émettre à la source lumineuse 25 des flashs avec chaque intervalle de temps pendant lequel la source lumineuse 25 émet un flash qui correspond à un nombre entier de tour(s) du rétrodiffuseur 112.

Par exemple, si le rétrodiffuseur 112 tourne à une vitesse de 1200 tours/mn, et fait donc un tour en 1/20 s, chaque flash a une durée de 1/20 s ou d'un multiple de 1/20 s.

Aucune lumière n'étant émise entre les flashs, seuls les moments où un flash est émis apparaît sur l'organe d'affichage 32.

Comme chaque moment où une image apparaît sur l'organe d'affichage 32 dure un ou plusieurs tours entiers du rétrodiffuseur 112, chaque image affichée ne comporte aucune lacune correspondant à l'ouverture telle que 41, 141 ou 241.

L'opérateur qui regarde l'organe d'affichage 32 perçoit les mêmes images qu'avec le dispositif de commande tel que 51, si ce n'est que les images ont une luminosité oscillant au rythme des flashs émis par la source lumineuse 25.

La mise en oeuvre du dispositif de commande 55 fait par exemple intervenir une base de temps commune pour commander les flashs de la source lumineuse 25 et le dispositif d'entraînement en rotation 50.

D'une façon générale, une plage de rotation commode pour le rétrodiffuseur 12 ou le rétrodiffuseur 112 est entre 600 et 5000 tours/mn.

Dans des variantes non illustrées du deuxième mode de réalisation de l'instrument optique selon l'invention, l'ouverture 41, 141 ou 241 est remplacée par une ouverture de forme différente ne contenant pas le centre de rotation 40, par exemple une ouverture n'allant pas jusqu'à la périphérie du rétrodiffuseur 112 ou une ouverture dont le contour est plus grand que l'ensemble 42 de réception et d'analyse de lumière ; et/ou est remplacé par plusieurs ouvertures.

Dans des variantes non illustrées du premier et du deuxième mode de réalisation de l'instrument optique selon l'invention :

- il n'y a pas de miroir de renvoi tel que 29 ou le miroir 29 est remplacé par un miroir incurvé pour jouer conjointement le rôle du miroir 29 et de la lentille de collimation 30 ;
- la source de lumière ponctuelle est configurée différemment, par exemple un laser émettant un pinceau de diamètre prédéterminé ;
- la lentille de collimation est remplacée par un organe de collimation différent, par exemple fait à partir de plusieurs lentilles ;
- la caméra 31 est remplacée par un autre organe capture d'images ;
- l'organe d'affichage 32 est remplacé par un autre organe d'exploitation d'images, par exemple un dispositif d'analyse d'images tel que 37 ; et/ou
- les microgravures telles que 16 sont disposées ailleurs que sur la face avant telle que 15, par exemple sur la face arrière ou dans l'épaisseur de la lentille.

De nombreuses autres variantes sont possibles en fonction des circonstances, et l'on rappelle à cet égard que l'invention ne se limite pas aux exemples décrits et représentés.

**Revendications**

1. Instrument optique pour identifier et localiser des microgravures (16) présentes sur une lentille ophtalmique (14), comportant :

   - une source lumineuse ponctuelle ;
   - un organe de collimation (30), avec ladite source lumineuse ponctuelle qui est disposée à un premier foyer dudit organe de collimation (30) pour que de la lumière issue de ladite source lumineuse ponctuelle devienne, après avoir traversé ledit organe de collimation, un faisceau (20) de lumière collimatée ;
   - un organe de retour de lumière ;
   - un support (13) configuré pour recevoir ladite lentille ophtalmique (14) entre ledit organe de collimation (30) et ledit organe de retour de lumière ; avec ledit organe de collimation (30), ledit support (13) et ledit organe de retour de lumière qui sont disposés pour que le faisceau (20) de lumière collimatée issu dudit organe de collimation (30) rencontre l'emplacement (15) de la lentille ophtalmique (14) où sont présentes des microgravures (16), traverse ladite lentille ophtalmique (14), rencontre ledit organe de retour de lumière, revienne vers ladite lentille ophtalmique (14) et traverse à nouveau ladite lentille ophtalmique (14) puis ledit organe de collimation (30) ;
   - un organe d'exploitation d'images (32) ; et
   - un organe de capture d'images (31) relié audit organe d'exploitation d'images (32), lequel organe de capture d'images (31) comporte un objectif (35) disposé à un deuxième foyer dudit organe de collimation, lequel objectif est mis au point pour que les images fournies à l'organe d'exploitation d'images (32) relié audit organe de capture d'images (31) contiennent une représentation desdites microgravures (16) permettant d'identifier et de localiser lesdites microgravures (16) ;

   **caractérisé en ce que** :

   - ledit organe de retour de lumière est un rétrodiffuseur (12) ;
   - ledit objectif (35) dudit organe de capture d'images (31) est mis au point pour fournir à l'organe d'exploitation d'images (32) des images du rétrodiffuseur (12) ;
   - ladite source lumineuse ponctuelle (25-27) présente une longueur d'ondes λ comprise entre 700 et 1000 nm ; et
   - ledit organe de collimation présente une distance focale F et ladite source lumineuse ponctuelle (25-27) présente un diamètre D inférieur ou égal à un cinquantième de la distance focale F.

2. Instrument selon la revendication 1, **caractérisé en ce qu'**il est configuré pour des microgravures (16) ayant une largeur a comprise entre 10 μm et 80 μm tandis que le diamètre D de ladite source lumineuse ponctuelle (25-27) et ladite distance focale F dudit organe de collimation (30) satisfont à la relation :

$$D \leq F\lambda/5a$$

   avec λ qui est la longueur d'ondes de ladite source lumineuse ponctuelle (25-27).

3. Instrument selon l'une quelconque des revendications 1 ou 2, **caractérisé en ce qu'**il est configuré pour des microgravures (16) ayant une largeur a comprise entre 30 μm et 60 μm avec λ qui est comprise entre 800 et 900 nm tandis que F est comprise entre 150 et 300 mm.

4. Instrument selon l'une quelconque des revendications 1 à 3, **caractérisé en ce que** ladite source lumineuse ponctuelle est formée par une source lumineuse étendue (25) et par un diaphragme (26) présentant un sténopé (27) placé en regard de ladite source lumineuse étendue (25), le diamètre dudit sténopé (27) formant ainsi le diamètre D de ladite source lumineuse ponctuelle.

5. Instrument selon l'une quelconque des revendications 1 à 4, **caractérisé en ce qu'**il comporte une lame semi-réfléchissante (28) de part et d'autre de laquelle sont disposés ladite source lumineuse ponctuelle (25-27) et ledit objectif (35) dudit organe de capture d'images (31).

6. Instrument selon l'une quelconque des revendications 1 à 5, **caractérisé en ce que** ledit rétrodiffuseur (12) est rotatif.

7. Instrument selon l'une quelconque des revendications 1 à 6, **caractérisé en ce qu'**il comporte un dispositif d'analyse d'images (37) configuré pour identifier et localiser lesdites microgravures (16), et un dispositif (38) de positionnement automatique d'un pion de centrage sur une face (15) de ladite lentille ophtalmique (14), relié audit dispositif d'analyse d'images (37).

8. Instrument selon l'une quelconque des revendications 1 à 7, **caractérisé en ce qu'**il comporte en outre :

- un dispositif (50) d'entraînement en rotation du rétrodiffuseur (112), configuré pour faire tourner le rétrodiffuseur (112) autour d'un centre de rotation prédéterminé (40) ;
- une ouverture (41 ; 141 ; 241) ménagée dans ledit rétrodiffuseur (112), ladite ouverture (41 ; 141 ; 241) étant configurée pour que le centre de rotation (40) du rétrodiffuseur (112) soit ailleurs que dans l'ouverture (41 ; 141 ; 241) ; et
- un ensemble (42) de réception et d'analyse de lumière, situé du côté du rétrodiffuseur (112) opposé audit support (13), avec ledit support (13), ledit rétrodiffuseur (112) et ladite ouverture (41 ; 141 ; 241) qui sont configurés pour que ledit ensemble (42) de réception et d'analyse de lumière reçoive de la lumière dudit faisceau (20) de lumière collimatée passée au travers de ladite lentille ophtalmique et au travers de ladite ouverture (41 ; 141 ; 241), ledit ensemble (42) de réception et d'analyse de lumière étant configuré pour déterminer au moins une caractéristique optique de ladite lentille ophtalmique (14).

9. Instrument selon la revendication 8, **caractérisé en ce que** le dispositif (50) d'entraînement en rotation du rétrodiffuseur (112) et l'organe de capture d'images (31) sont reliés à un dispositif de commande (51) configuré pour que chaque intervalle de temps pendant lequel l'organe de capture d'images (31) prend une image ait une durée pendant laquelle le rétrodiffuseur (112) fait un nombre entier de tour(s).

10. Instrument selon la revendication 8, **caractérisé en ce que** le dispositif (50) d'entraînement en rotation du rétrodiffuseur (112) et la source lumineuse ponctuelle (25-27) sont reliés à un dispositif de commande (55) configuré pour faire émettre à ladite source lumineuse ponctuelle (25-27) des flashs ayant chacun une durée pendant laquelle le rétrodiffuseur (112) fait un nombre entier de tour(s).

11. Instrument selon l'une quelconque des revendications 8 à 10, **caractérisé en ce que** ledit ensemble (42) de réception et d'analyse de lumière comporte une matrice de Hartmann (45) éclairée par ladite lumière dudit faisceau (20) de lumière collimatée passée au travers de ladite lentille ophtalmique (14) et au travers de ladite ouverture (41 ; 141 ; 241) ; un organe additionnel de capture d'images (46) éclairé par la lumière passée au travers de la matrice de Hartmann (45) ; et un dispositif d'analyse (47) pour analyser les images capturées par l'organe additionnel de capture d'images (46) afin de déterminer ladite au moins une caractéristique optique de la lentille ophtalmique (14).

12. Instrument selon l'une quelconque des revendications 8 à 11, **caractérisé en ce que** ledit dispositif d'analyse (47) pour analyser les images capturées par l'organe additionnel de capture d'images (46) est relié à un organe d'affichage (32) pour lui permettre d'afficher ladite au moins une caractéristique optique de la lentille ophtalmique (14).

13. Instrument selon l'une quelconque des revendications 8 à 12, **caractérisé en ce que** ledit dispositif d'analyse (47) pour analyser les images capturées par l'organe additionnel de capture d'images (46) est relié à un dispositif (38) de positionnement automatique d'un pion de centrage sur une face (15) de ladite lentille ophtalmique (14).

14. Instrument selon l'une quelconque des revendications 8 à 13, **caractérisé en ce que** ledit rétrodiffuseur (112) est à contour circulaire et ladite ouverture (41 ; 141) est en forme de secteur angulaire.

15. Instrument selon l'une quelconque des revendications 8 à 13, **caractérisé en ce que** ledit rétrodiffuseur (112) est à contour circulaire et ladite ouverture (241) en forme de spirale.

**Patentansprüche**

1. Optisches Instrument zur Identifizierung und Lokalisierung von Mikroätzung (16) auf einer ophthalmischen Linse (14), umfassend:

- eine Punktlichtquelle;
- ein Kollimationselement (30) mit der Punktlichtquelle, die an einem ersten Brennpunkt des Kollimationselements (30) angeordnet ist, damit das Licht aus der Punktlichtquelle ein Strahl (20) aus kollimiertem Licht wird, nachdem es das Kollimationselement durchquert hat;
- ein Lichtrückführelement;
- einen Träger (13), der ausgelegt ist, die ophthalmische Linse (14) zwischen dem Kollimationselement (30) und dem Lichtrückführelement aufzunehmen; mit dem Kollimationselement (30), dem Träger (13) und dem Lichtrückführelement, die derart angeordnet sind, dass der Strahl (20) aus kollimiertem Licht aus dem Kollimationselement (30) die Stelle (15) der ophthalmischen Linse (14) trifft, wo Mikroätzung (16) vorhanden ist, die ophthalmische Linse (14) durchquert, das Lichtrückführelement trifft, zu der ophthalmischen Linse (14) zurückkehrt und erneut die ophthalmische Linse (14) und dann das Kollimationselement (30) durchquert;
- ein Bildauswertungselement (32); und
- ein Bildaufnahmeelement (31), das mit dem Bildauswertungselement (32) verbunden ist, wobei das Bildaufnahmeelement (31) ein Objektiv (35) umfasst, das an einem zweiten Brennpunkt des Kollimationselements angeordnet ist, wobei das Objektiv scharfgestellt ist, damit die Bilder, die an das Bildauswertungselement (32) geliefert werden, das mit dem Bildaufnahmeelement (31) verbunden ist, eine Darstellung der Mikroätzung (16) enthalten, die es erlaubt, die Mikroätzung (16) zu identifizieren und zu lokalisieren;

**dadurch gekennzeichnet, dass**

- das Lichtrückführelement eine Rückstreueinrichtung (12) ist;
- das Objektiv (35) des Bildaufnahmeelements (31) scharfgestellt ist, um dem Bildauswertungselement (32) Bilder der Rückstreueinrichtung (12) zu liefern;
- die Punktlichtquelle (25 - 27) eine Wellenlänge λ zwischen 700 und 1000 nm aufweist; und
- das Kollimationselement eine Brennweite F aufweist und die Punktlichtquelle (25 - 27) einen Durchmesser D aufweist, der kleiner oder gleich einem Fünfzigstel der Brennweite F ist.

2. Instrument nach Anspruch 1, **dadurch gekennzeichnet, dass** es für Mikroätzung (16) mit einer Breite a zwischen 10 μm und 80 μm ausgelegt ist, während der Durchmesser D der Punktlichtquelle (25 - 27) und die Brennweite F des Kollimationselements (30) die folgende Relation erfüllen:

$$D \le F\lambda/5a$$

wobei λ die Wellenlänge der Punktlichtquelle (25 - 27) ist.

3. Instrument nach einem der Ansprüche 1 oder 2, **dadurch gekennzeichnet, dass** es für Mikroätzung (16) mit einer Breite a zwischen 30 μm und 60 μm ausgelegt ist, wobei λ zwischen 800 und 900 nm liegt, während F zwischen 150 und 300 mm liegt.

4. Instrument nach einem der Ansprüche 1 bis 3, **dadurch gekennzeichnet, dass** die Punktlichtquelle durch eine gestreckte Lichtquelle (25) und eine Blende (26), die eine Lochblende (27) aufweist, die gegenüber der gestreckten Lichtquelle (25) angeordnet ist, gebildet ist, wobei der Durchmesser der Lochblende (27) somit den Durchmesser D der Punktlichtquelle bildet.

5. Instrument nach einem der Ansprüche 1 bis 4, **dadurch gekennzeichnet, dass** es eine halbreflektierende Klinge (28) umfasst, an welcher beiderseits die Punktlichtquelle (25 - 27) und das Objektiv (35) des Bildaufnahmeelements (31) angeordnet sind.

6. Instrument nach einem der Ansprüche 1 bis 5, **dadurch gekennzeichnet, dass** die Rückstreueinrichtung (12) drehbar ist.

7. Instrument nach einem der Ansprüche 1 bis 6, **dadurch gekennzeichnet, dass** es eine Bildanalysevorrichtung (37), die ausgelegt ist, die Mikroätzung (16) zu identifizieren und zu lokalisieren, und eine Vorrichtung (38) zur automatischen Positionierung eines Zentrierungsstifts auf einer Seite (15) der ophthalmischen Linse (14), die mit der Bildanalysevorrichtung (37) verbunden ist, umfasst.

8. Instrument nach einem der Ansprüche 1 bis 7, **dadurch gekennzeichnet, dass** es ferner Folgendes umfasst:

- eine Vorrichtung (50) zum Versetzen der Rückstreueinrichtung (112) in eine Drehbewegung, die ausgelegt ist, die Rückstreueinrichtung (112) um einen vorbestimmten Drehpunkt (40) zu drehen;
- eine Öffnung (41; 141; 241), die in der Rückstreueinrichtung (112) angeordnet ist, wobei die Öffnung (41; 141; 241) derart ausgelegt ist, dass sich der Drehpunkt (40) der Rückstreueinrichtung (112) woanders als in der Öffnung (41; 141; 241) befindet; und
- eine Anordnung (42) zum Empfang und zur Analyse von Licht, die auf der Seite der Rückstreueinrichtung (112) dem Träger (13) gegenüberliegend befindlich ist, mit dem Träger (13), der Rückstreueinrichtung (112) und der Öffnung (41; 141; 241), die derart ausgelegt sind, dass die Anordnung (42) zum Empfang und zur Analyse von Licht das Licht von dem Strahl (20) aus kollimiertem Licht empfängt, das die ophthalmische Linse und die Öffnung (41; 141; 241) durchquert hat, wobei die Anordnung (42) zum Empfang und zur Analyse von Licht ausgelegt ist, mindestens eine optische Eigenschaft der ophthalmischen Linse (14) zu bestimmen.

9. Instrument nach Anspruch 8, **dadurch gekennzeichnet, dass** die Vorrichtung (50) zum Versetzen der Rückstreueinrichtung (112) in eine Drehbewegung und das Bildaufnahmeelement (31) mit einer Steuervorrichtung (51) verbunden sind, die derart ausgelegt ist, dass jedes Zeitintervall, innerhalb dessen das Bildaufnahmeelement (31) ein Bild aufnimmt, eine Dauer aufweist, während der die Rückstreueinrichtung (112) eine ganze Anzahl von Drehung(en) ausführt.

10. Instrument nach Anspruch 8, **dadurch gekenn-**

**zeichnet, dass** die Vorrichtung (50) zum Versetzen der Rückstreueinrichtung (112) in eine Drehbewegung und die Punktlichtquelle (25 - 27) mit einer Steuervorrichtung (55) verbunden sind, die derart ausgelegt ist, dass sie die Punktlichtquelle (25 - 27) Blitze abgeben lässt, die jeweils eine Dauer aufweisen, während der die Rückstreueinrichtung (112) eine ganze Anzahl von Drehung(en) ausführt.

**11.** Instrument nach einem der Ansprüche 8 bis 10, **dadurch gekennzeichnet, dass** die Anordnung (42) zum Empfang und zur Analyse von Licht eine Hartmann-Matrix (45), die von dem Licht von dem Strahl (20) aus kollimiertem Licht, das die ophthalmische Linse (14) und die Öffnung (41; 141; 241) durchquert hat, beleuchtet wird; ein zusätzliches Bildaufnahmeelement (46), das von dem Licht beleuchtet wird, das die Hartmann-Matrix (45) durchquert hat; und eine Analysevorrichtung (47) zum Analysieren der Bilder, die von dem zusätzlichen Bildaufnahmeelement (46) aufgenommen wurden, um die mindestens eine optische Eigenschaft der ophthalmischen Linse (14) zu bestimmen, umfasst.

**12.** Instrument nach einem der Ansprüche 8 bis 11, **dadurch gekennzeichnet, dass** die Analysevorrichtung (47) zum Analysieren der Bilder, die von dem zusätzlichen Bildaufnahmeelement (46) aufgenommen wurden, mit einem Anzeigeelement (32) verbunden ist, um es ihr zu erlauben, die mindestens eine optische Eigenschaft der ophthalmischen Linse (14) anzuzeigen.

**13.** Instrument nach einem der Ansprüche 8 bis 12, **dadurch gekennzeichnet, dass** die Analysevorrichtung (47) zum Analysieren der Bilder, die von dem zusätzlichen Bildaufnahmeelement (46) aufgenommen wurden, mit einer Vorrichtung (38) zur automatischen Positionierung eines Zentrierungsstifts auf einer Seite (15) der ophthalmischen Linse (14) verbunden ist.

**14.** Instrument nach einem der Ansprüche 8 bis 13, **dadurch gekennzeichnet, dass** die Rückstreueinrichtung (112) eine kreisförmige Kontur und die Öffnung (41; 141) die Form eines Winkelabschnitts aufweist.

**15.** Instrument nach einem der Ansprüche 8 bis 13, **dadurch gekennzeichnet, dass** die Rückstreueinrichtung (112) eine kreisförmige Kontur und die Öffnung (241) die Form einer Spirale aufweist.

## Claims

**1.** Optical instrument for identifying and localizing micro-engravings (16) present on an ophthalmic lens (14), including:

- a point light source;
- a collimating member (30), said point light source being placed at a first focal point of said collimating member (30) so that light issued from said point light source becomes, after having passed through said collimating member, a beam (20) of collimated light;
- a member for sending back light;
- a holder (13) configured to hold said ophthalmic lens (14) between said collimating member (30) and said member for sending back light; said collimating member (30), said holder (13) and said member for sending back light are placed so that the beam (20) of collimated light issued from said collimating member (30) encounters the location (15) on the ophthalmic lens (14) where micro-engravings (16) are present, passes through said ophthalmic lens (14), encounters said member for sending back light, returns toward said ophthalmic lens (14) and once again passes through said ophthalmic lens (14) then said collimating member (30);
- an image-exploiting unit (32); and
- an image-capturing unit (31) connected to said image-exploiting unit (32), which image-capturing unit (31) includes an objective (35) placed at a second focal point of said collimating member, which objective is focused so that the images delivered to the image-exploiting unit (32), which is connected to said image-capturing unit (31), contain a representation of said micro-engravings (16) allowing said micro-engravings (16) to be identified and localized;

**characterized in that**:

- said member for sending back light is a backscatterer (12);
- said objective (35) of said image-capturing unit (31) is focused in order to deliver to the image-exploiting unit (32) images of the backscatterer (12);
- said point light source (25-27) has a wavelength $\lambda$ comprised between 700 and 1000 nm; and
- said collimating member has a focal length F and said point light source (25-27) has a diameter D smaller than or equal to one fiftieth of the focal length F.

**2.** Instrument according to Claim 1, **characterized in that** it is configured for micro-engravings (16) having a width a comprised between 10 $\mu$m and 80 $\mu$m, the diameter D of said point light source (25-27) and said focal length F of said collimating member (30) respecting the relationship:

$$D \leq F\lambda/5a$$

where $\lambda$ is the wavelength of said point light source (25-27).

3.  Instrument according to either one of Claims 1 and 2, **characterized in that** it is configured for micro-engravings (16) having a width a comprised between 30 $\mu$m and 60 $\mu$m, $\lambda$ being comprised between 800 and 900 nm while F is comprised between 150 and 300 mm.

4.  Instrument according to any one of Claims 1 to 3, **characterized in that** said point light source is formed by an extended light source (25) and by a diaphragm (26) containing a pinhole (27) placed facing said extended light source (25), the diameter of said pinhole (27) thus forming the diameter D of said point light source.

5.  Instrument according to any one of Claims 1 to 4, **characterized in that** it includes a half-silvered mirror (28) on either side of which said point light source (25-27) and said objective (35) of said image-capturing unit (31) are placed.

6.  Instrument according to any one of Claims 1 to 5, **characterized in that** said backscatterer (12) is rotatable.

7.  Instrument according to any one of Claims 1 to 6, **characterized in that** it includes an image-analyzing device (37) configured to identify and localize said micro-engravings (16), and a device (38) for automatically positioning a centering pin on a face (15) of said ophthalmic lens (14), which device is connected to said image-analyzing device (37).

8.  Instrument according to any one of Claims 1 to 7, **characterized in that** it furthermore comprises:

    - a device (50) for driving the backscatterer (112) to rotate, which is configured to make the backscatterer (112) turn about a predetermined center of rotation (40);
    - an aperture (41; 141; 241) in said backscatterer (112), said aperture (41; 141; 241) being configured so that the center of rotation (40) of the backscatterer (112) is elsewhere than in the aperture (41; 141; 241); and
    - an assembly (42) for receiving and analyzing light, which assembly is located on that side of the backscatterer (112) which is opposite said holder (13), said holder (13), said backscatterer (112) and said aperture (41; 141; 241) being configured so that said assembly (42) for receiving and analyzing light receives light from said beam (20) of collimated light after it has passed through said ophthalmic lens and through said aperture (41; 141; 241), said assembly (42) for receiving and analyzing light being configured to determine at least one optical characteristic of said ophthalmic lens (14).

9.  Instrument according to Claim 8, **characterized in that** the device (50) for driving the backscatterer (112) to rotate and the image-capturing unit (31) are connected to a controlling device (51) configured so that each time interval during which the image-capturing unit (31) takes an image has a duration during which the backscatterer (112) makes an integer number of turns.

10. Instrument according to Claim 8, **characterized in that** the device (50) for driving the backscatterer (112) to rotate and the point light source (25-27) are connected to a controlling device (55) configured so as to make said point light source (25-27) emit flashes each having a duration during which the backscatterer (112) makes an integer number of turns.

11. Instrument according to any one of Claims 8 to 10, **characterized in that** said assembly (42) for receiving and analyzing light includes a Hartmann matrix (45) illuminated by said light of said beam (20) of collimated light after it has passed through said ophthalmic lens (14) and through said aperture (41; 141; 241); an additional image-capturing unit (46) illuminated by the light after it has passed through the Hartmann matrix (45); and an analyzing device (47) for analyzing the images captured by the additional image-capturing unit (46) in order to determine said at least one optical characteristic of the ophthalmic lens (14).

12. Instrument according to any one of Claims 8 to 11, **characterized in that** said analyzing device (47) for analyzing the images captured by the additional image-capturing unit (46) is connected to a displaying unit (32) in order to allow it to display said at least one optical characteristic of the ophthalmic lens (14).

13. Instrument according to any one of Claims 8 to 12, **characterized in that** said analyzing device (47) for analyzing the images captured by the additional image-capturing unit (46) is connected to a device (38) for automatically positioning a centering pin on a face (15) of said ophthalmic lens (14).

14. Instrument according to any one of Claims 8 to 13, **characterized in that** said backscatterer (112) has a circular outline and said aperture (41; 141) takes the form of an angular sector.

**15.** Instrument according to any one of Claims 8 to 13, **characterized in that** said backscatterer (112) has a circular outline and said aperture (241) is spiral shaped.

Fig. 1

Fig. 2

Fig. 3

**EP 3 111 188 B1**

Fig. 4

Fig. 5

Fig. 6

Fig. 7

Fig. 8

18

Fig. 9

Fig. 10

Fig. 11

112

241

42

40

Fig. 12

| 31 | — | 37 | — | 38 |

| 46 | — | 47 |

Fig. 13

| 50 | — | 55 | — | 25 |

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2239552 A
- EP 1613450 A
- EP 1739472 A
- EP 0856728 A
- EP 1093907 A
- EP 1997585 A
- FR 2825466
- US 6888626 B
- WO 9534800 A